Europäisches Patentamt

(19) European Patent Office

Office européen des brevets

(11) Publication number: **0 060 726**
**A2**

(12) # EUROPEAN PATENT APPLICATION

(21) Application number: **82301351.1**

(22) Date of filing: **16.03.82**

(51) Int. Cl.³: **F 42 B 15/18, F 02 K 9/88**

(30) Priority: **17.03.81 GB 8108361**

(43) Date of publication of application: **22.09.82**
**Bulletin 82/38**

(84) Designated Contracting States: **BE CH DE FR GB IT LI SE**

(71) Applicant: **NORMALAIR-GARRETT (HOLDINGS) LIMITED, Yeovil Somerset (GB)**

(72) Inventor: **Young, Robert William, Yonder Close New Road, Norton Sub Hamdon Somerset (GB)**

(74) Representative: **Jack, Bruce James et al, FORRESTER & BOEHMERT Widenmayerstrasse 4/I, D-8000 Munchen 22 (DE)**

(54) **Gas thruster systems.**

(57) A gas thruster system particularly suited for use in controlling the flight of an aerial projectile, has self-centering valve means controlling the exhaust of gas from a pair of oppositely directed exhaust nozzles. Actuating means, which may comprise a pair of solenoids, are adapted for co-operation with the valve means and, in operation, shift the valve means to either side of a null central position towards closing one or the other of the pair of nozzles to provide differential gas flow from the pair of nozzles whilst maintaining a substantially constant area vent from a gas source.

DESCRIPTION

Title:    "Gas Thruster Systems"

THIS INVENTION relates to gas thruster systems and is particularly, but not exclusively, concerned with a gas thruster system suited for use in controlling the flight of a projectile propelled from a gun.

It is known to steer rockets along a flight path by controlled exhaust of gas from opposed nozzles.   For example, U.S. Patent No. 4,017,040 discloses a steerable rocket motor apparatus adapted to tow a load, such as an aircraft ejection seat, fastened to the rocket apparatus by means of a tow line.   The rocket apparatus is caused to fly a computed trajectory by controlling the thrust of opposed pairs of rocket nozzles, a valve member being provided for proportioning the escape of high pressure gas between each pair of opposed nozzles. In the detailed disclosure of U.S. 4,017,040 the valve member is formed with regions of differing diameter at its centre length whereby opposed surfaces of differing face area are provided.   In operation, one of these surface areas is constantly exposed to combustion chamber pressure which tends to move the valve member towards closing the nozzle at the opposite end of the valve member.   This pressure is balanced to move the valve member to a null centre position in which there is equal thrust from each nozzle, or is overcome to move the valve member towards closing the opposite nozzle, by pressure applied to an opposed surface area of the valve member under the control of an electrically actuated spool valve.

A disadvantage of this arrangement is that the valve member is not self-centering and, if the valve member control loop is not actuated before commencement of rocket motor firing, the valve member is biassed to close one of the nozzles of the pair of opposed nozzles with which it is associated so that unidirectional thrust is applied to the rocket motor apparatus by gas escaping from the opposite nozzle, and the apparatus does not fly along a straight line path.   After actuation of the valve member control loop, the valve member hunts before finding a null centre position between its opposed pair of nozzles to provide equal thrust from each nozzle and cause the apparatus to fly along a straight line path.   Such a system is not satisfactory for controlling

0060726

the flight of a projectile that is adapted to be propelled from a gun.

It is an object of the invention to provide a gas thruster system which is particularly suited for use in controlling the flight of an aerial projectile, and which has a high rate of response to control signals input to the system to produce thrust changes.

It is a further object of the invention to provide a gas thruster system which is devoid of pressure control valves.

Another object of the invention is to provide a gas thruster system combining low cost and minimum complexity with high reliability and rugged construction.

According to the invention a gas thruster system comprises a gas source, vent means for supplying gas from the gas source to at least one pair of oppositely directed exhaust nozzles, valve means for controlling the discharge of gas from each pair of nozzles, means biassing each control valve means towards a null central position between its associated pair of nozzles, and actuating means for shifting each control valve means to either side of the null central position towards closing one or the other of said pair of nozzles and thereby to provide differential gas flow from said pair of nozzles whilst maintaining a substantially constant area vent from the gas source.

Means for centering each control valve means between its associated pair of nozzles may comprise a pair of opposing compression springs acting between the control valve means and opposed interior faces of a gas thruster body portion.

The actuating means may comprise one or more solenoids co-operating with valve elements adapted for controlling the discharge of gas from both nozzles of a pair of oppositely directed nozzles.

In an embodiment of the invention a single valve element comprising a double ended poppet valve extends between an opposed pair of nozzles and is arranged for reciprocal movement by a pair of solenoids.

The gas source may be provided by gas generator means comprising a solid propellent charge in communication with a combustion chamber into which an igniter vents to ignite the solid propellent charge which burns to produce hot gas.

A gas thruster system in accordance with the present invention is particularly suited for use in controlling the flight of a small calibre aerial projectile and comprises a gas source, vent means for supplying gas from said gas source to at least two pairs of oppositely directed exhaust nozzles arranged normal to each other to provide lateral forces for control of pitch and yaw, valve means for controlling the discharge of gas from each pair of nozzles, spring means biassing each control valve means towards a null central position between its associated pair of nozzles, and solenoid means adapted for shifting each control valve means to either side of the null central position towards closing one or the other of said pair of nozzles and thereby to provide differential gas flow from said pair of nozzles whilst maintaining substantially constant area vent from said gas source.

Roll control may be provided by two pairs of oppositely directed exhaust nozzles arranged symmetrically of and parallel to a radial plane passing through the longitudinal axis of the aerial projectile, and these two pairs of nozzles may also be used to provide the lateral thrust forces for control of either pitch or yaw.

The invention will now be further described by way of example and with reference to the accompanying drawings, in which:-

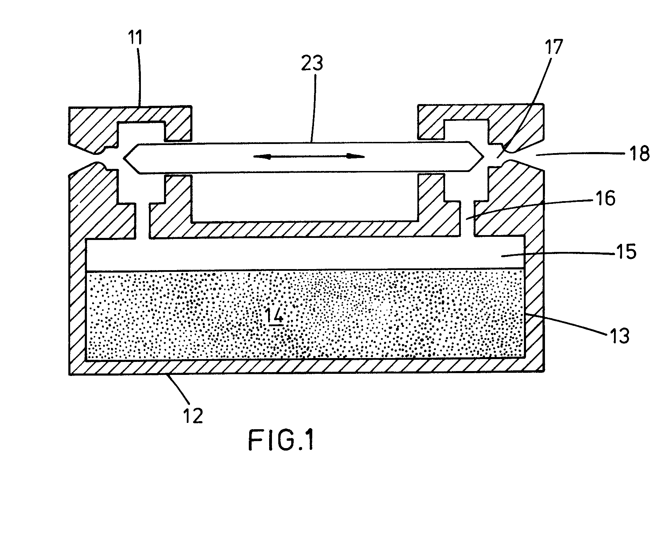

Figure 1 illustrates the principal features of a gas thruster system in accordance with the present invention; and

Figure 2 shows a schematic fractional view of a gas thruster system in an embodiment of the invention.

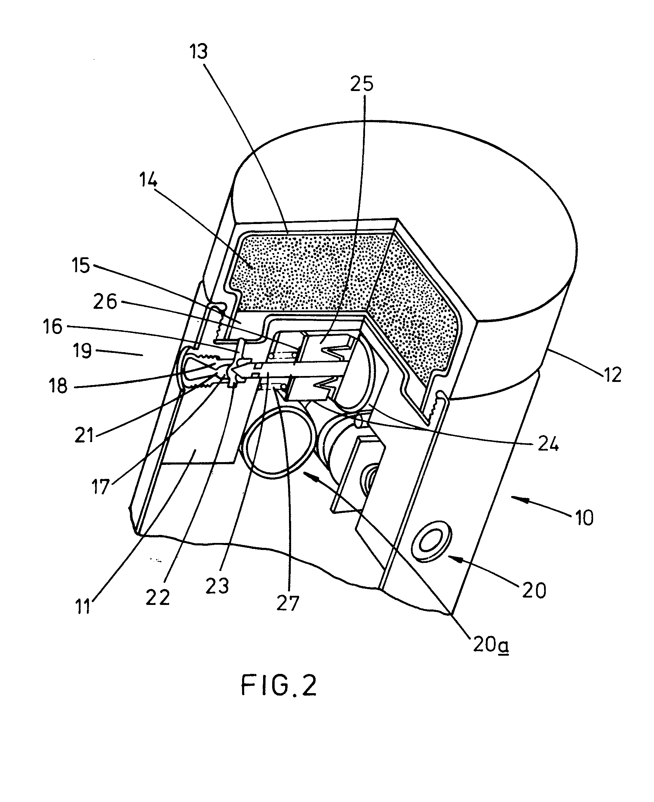

Referring to the drawings, a gas thruster system 10 includes a thruster body 11 and a gas source comprised by a gas generator 12 which together are adapted to the profile of an associated aerial body, such as a projectile (not shown) which is adapted to be propelled from a gun. The gas generator 12 comprises a propellent chamber 13 filled with an appropriate solid propellent charge 14 which is in communication with a combustion chamber 15 into which an igniter (not shown) vents to ignite the solid propellent charge 14 which burns to produce hot gas. The combustion chamber 15 connects by way of ducts 16 and orifices 17 with pairs of oppositely directed exhaust nozzles 18, which in the embodiment of Figure 2 comprise one pair 19 in one radial plane of the body 11 and two parallel pairs 20, 20a arranged symmetrically of another radial plane disposed normal to the radial plane in which the pair of nozzles 19 lies.

The flow axis of the two nozzles of each pair of nozzles 19, 20, 20a is also that of an elongate double headed poppet valve 23 and a pair of the orifices 17. Each of the orifices 17 is positioned so as to form an entry to the throat region 21 of one of the nozzles 18 and connects this with a small chamber 22 into which one or more of the combustion gas ducts 16 enters. The valve 23 is arranged to slide, in a leakproof manner, within the thruster body 11 and to be co-operable with the two orifices 17. The valve 23 extends through a solenoid arrangement 24 which comprises a pair of solenoids 25 mounted back to back and positioned centrally within the thruster body 11. The poppet valve 23 is retained as part of the solenoid arrangement 24 by a pair of circlips 26 located on its surface outboard of the two solenoids 25 and is urged towards a null central position between its associated pair of nozzles by opposing compression springs 27 exerting a force between the circlips 26 and opposed interior surfaces of the thruster body 11. The heads of the valves 23 are suitably shaped relative to the orifices 17 so as to provide a constant, or substantially constant, total area of vent from the combustion chamber 15 of the gas generator 12 irrespective of the operating position of the valve 23.

In operation of the invention with the gas thruster system 10 attached to an aerial projectile (not shown), in the system-off condition, prior to firing of the projectile and ignition of the propellent charge 14, each valve 23 is centered between its associated pair of nozzles by the action of the compression springs 27. On firing the projectile and ignition of the propellent charge 14 pressurised combustion gases issue from the combustion chamber 15 by way of the ducts 16, chambers 22 and the orifices 17, to discharge equally and oppositely from the nozzles 18 of each pair of nozzles 19, 20, 20a, and the projectile flies initially along a straight line path.

When sensing and signalling means (not shown and forming no part of this invention) require a course correction to be made the appropriate solenoid 25 of the one or two solenoid arrangements 24 is energised, according to which control axis it is necessary to activate, i.e. yaw, pitch or roll. Energisation of a solenoid 25 causes the valve member 23 to move towards one orifice 17 so as to reduce its flow area and equally to move away from the companion orifice 17 which increases the flow area of this correspondingly, whereby the flow rate from the two opposing nozzles 18 becomes unequal while maintaining a constant, or substantially constant, total flow rate.    Translation of the difference in thrust thus created across the thruster body 11 from the pair of nozzles, say 19, causes the projectile to rotate about its centre of gravity in, say, the pitching plane, or translate towards a correcting course.

Similarly, if the two pairs of nozzles 20, 20a are assumed then to be in the yawing plane and their corresponding solenoids are energised to move their poppet valves 23 in the same direction and to the same extent, then directional correction of the flight of the aerial body is obtained in this plane.    Movement in roll is obtained by way of these two pairs of nozzles 20, 20a when their oppositely directed solenoids are energised to move their poppet valves 23 in opposite directions whereby the oppositely directed discharges become offset and cause the aerial body (not shown) to roll.

In all directional control modes and irrespective of their rates of operation gas thruster systems according to the invention maintain constant, or substantially constant, gas flow rate by providing an effectively constant area vent from a gas source such as a simple solid propellent gas generator without need for the use of pressure regulating valves and associated components.

0060726

CLAIMS

1.    A gas thruster system comprising a gas source, vent means for supplying gas from the gas source to at least one pair of oppositely directed exhaust nozzles, valve means for controlling the discharge of gas from each pair of nozzles, means biassing each control valve means towards a null central position between its associated pair of nozzles, and actuating means for shifting each control valve means to either side of the null position towards closing one or the other of said pair of nozzles and thereby to provide differential gas flow from the pair of nozzles whilst maintaining a substantially constant area vent from the gas source.

2.    A gas thruster system as claimed in Claim 1, wherein said actuating means comprises one or more solenoids.

3.    A gas thruster system as claimed in Claim 1 or Claim 2, wherein said biassing means comprises a pair of opposed compression springs acting between said control valve means and interior faces of a gas thruster body portion.

4.    A gas thruster system as claimed in any preceding Claim, wherein each said control valve means comprises a single valve element adapted for controlling the discharge of gas from both nozzles of said at least one pair of oppositely directed nozzles.

5.    A gas thruster system as claimed in Claim 4, wherein the single valve element comprises a double-ended poppet valve.

6.    A gas thruster system as claimed in any preceding Claim, wherein the gas source is provided by gas generator means comprising a solid propellant charge in communication with a combustion chamber into which an igniter vents to ignite the solid propellant charge which burns to produce hot gas.

7. A small calibre aerial projectile including a gas thruster system comprising a gas source, vent means for supplying gas from said gas source to at least two pairs of oppositely directed exhaust nozzles arranged normal to each other to provide lateral forces for control of pitch and yaw, valve means for controlling the discharge of gas from each pair of nozzles, spring means biassing each control valve means towards a null central position between its associated pair of nozzles, and solenoid means adapted for shifting each control valve means to either side of the null position towards closing one or the other of said pair of nozzles and thereby to provide differential gas flow from said pair of nozzles whilst maintaining a substantially constant area vent from said gas source.

8. A small calibre aerial projectile as claimed in Claim 7, wherein two pairs of oppositely directed exhaust nozzles are arranged symmetrically of and parallel to a radial plane passing through the longitudinal axis of the aerial projectile to provide lateral thrust forces for roll control.

1/2

FIG.1

FIG.2